Europäisches Patentamt

European Patent Office

Office européen des brevets

(11) Publication number: **0 171 479**
**A1**

(12) **EUROPEAN PATENT APPLICATION**

(21) Application number: **84401625.3**

(22) Date of filing: **03.08.84**

(51) Int. Cl.⁴: **G 02 B 6/28**

(43) Date of publication of application:
**19.02.86 Bulletin 86/8**

(84) Designated Contracting States:
**DE FR GB**

(71) Applicant: **Magnetic Controls Company**
**5501 Green Valley Drive**
**Minneapolis Minnesota 55435(US)**

(72) Inventor: **Gravel, Robert L.**
**45, Walnut Ridge Road**
**Stow Massachusetts 01775(US)**

(74) Representative: **Descourtieux, Philippe et al,**
**CABINET BEAU de LOMENIE 55 rue d'Amsterdam**
**F-75008 Paris(FR)**

(54) **Transmissive multiport star coupler assembly and method.**

(57) The novel star coupler 10 comprises two spaced-apart co-axially aligned input and output supporting spindles 12, 14 each having a plurality of circumferentially symmetric radially outwardly extending slots. A like plurality of optical fibers 18 are bonded to the spindles 12, 14 and are provided with a fused biconical taper star coupling 19 along an intermediate region. A stress relief and environmentally secure housing 16 is bonded around the spindles 12, 14. The novel method of fabricating the star coupler comprises steps of bonding the optic fibers 18 in said slots of the spindles 12, 14, controllably rotating one spindle to twist the fibers 18 one over the other in an intermediate region, heating the fibers 18 in the region of the twist to fuse the fibers together, controllably pulling the spindles 12, 14 apart to form a fused biconical taper star coupling 19, and encasing the spindles 12, 14.

*FIG. 1*

EP 0 171 479 A1

This invention is drawn to the field of optics, and more particularly, to a novel transmissive multiport star coupler assembly and method.

Some optical communication systems employ transmissive multiport star couplers as part of a local transition network used to effect data transfer locally between selected network terminals over fiber optic paths. In may applications, several hundred and more network terminals are thereby controllably interconnected. The transmissive multiport star couplers utilized in such systems are called upon to provide not only a high order of network terminal handling capability but also a minimization of excess power loss therethrough. The star couplers available at present are large devices having a parallelogram shape. The input and the output fibers either are generally bunched together or are in a flat-pack arrangement. This fabrication approach, however, leads to micro-bending of the fiber structures which results in both undesirable excess loss values and a restricted network handling capability.

The novel transmissive multiport star coupler of the present invention provides a high order of network terminal handling capability by symmetrically arranging and bonding the optic fibers to first and second spaced-apart stress-relief supporting spindles and by forming a coupling between the several optical fibers at a point intermediate the spindles. A minimization of excess loss between the input and the output ports of the coupler is provided by a spindle geometry that substantially reduces micro-bending. The method of forming the coupling of the novel multiport star coupler of the present invention includes the steps of controllably rotating the spindles to twist the optic fibers extending therebetween, applying heat to the region of the twist to fuse the fibers each onto the others, and controllably pulling the spindles apart along their longitudinal axes for forming a fused biconical taper coupling. A housing half-shell is bonded to the spindle supported fused biconical taper coupling for providing additional stress relief and a mating and complementary housing half-shell is provided for environmental protection. The method of fabricating the multiport transmissive star coupler of the present invention permits high volume manufacturing of high quality star couplers at a comparatively low cost that are characterized by comparatively small size, rugged construction, and good performance. The spindles and the housing are formed from a hard and relatively temperature stable resinous, thermoplastic such as Lexan, or a metallic substance. All types of optical glassfiber are usable such as multi-mode, step index, graded index, and single mode fibers. Coated fibers may be utilized as well. The transmissive multiport star couplers of the present invention can have from 2 X 2 to N X N ports.

The invention will become better understood by referring to the following exemplary and nonlimiting detailed description of the preferred embodiment and to the drawings, wherein :

Fig. 1 is a perspective view, partially in schematic, of the transmissive multiport star coupler assembly of the present invention;

Fig. 2 shows in Figs. 2A and 2B an isometric view and shows in Fig. 2C a cross-sectional view of a support and strain-relief spindle subassembly of the transmissive multiport star coupler assembly of the present invention;

Fig. 3 shows a pictorial view of apparatus for practicing the steps of the method of fabricating the transmissive multiport star coupler assembly of the present invention;

Fig. 4 shows a pictorial view of the apparatus of Fig. 3 illustrating the steps of the method of fabricating the transmissive multiport star coupler of the present invention;

Fig. 5 is a cross-sectional view of a housing subassembly of the transmissive multiport star coupler assembly of the present invention; and

Fig. 6 is an exploded perspective view of the housing subassembly of Fig. 5.

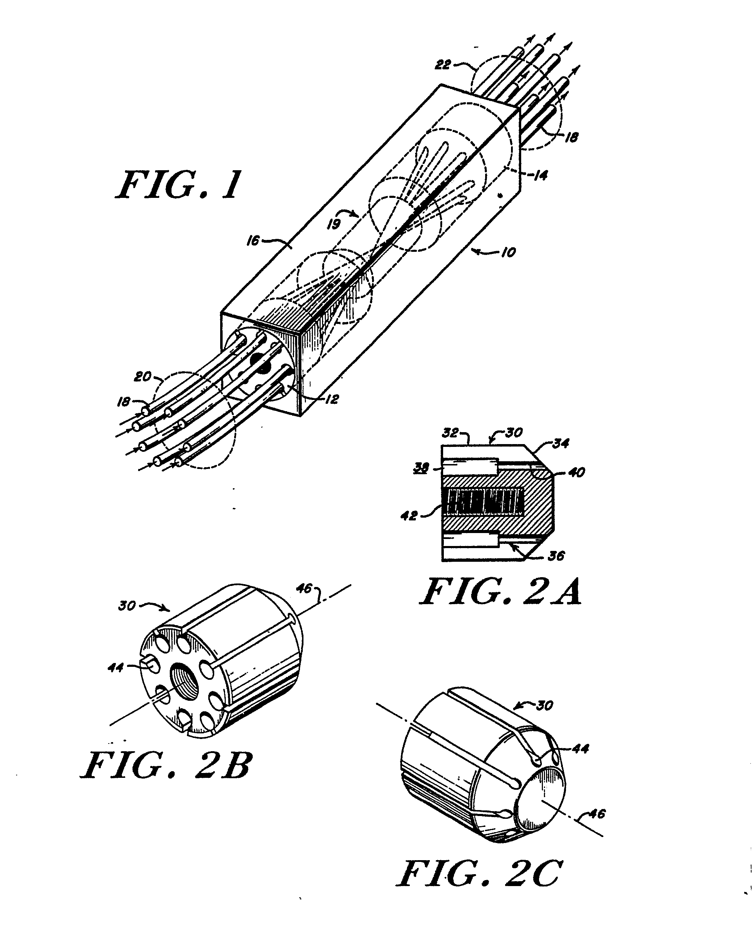

Referring now to Fig. 1, generally shown at 10 is a transmissive multiport star coupler assembly of the present invention. The coupler 10 includes an input spindle subassembly 12 and an output spindle subassembly 14 which are fixably mounted to and sealed in a housing 16. A plurality of optic fibers 18, eight of which are illustrated, are symmetrically circumferentially bonded to the spindles 12 and 14 and have an optical mixing section generally designated 19, preferably a fused biconical taper star coupling, in a region along their length between the spindles 12 and 14 and within the housing 16. Light energy present in one or more of the input ports 20 is optically mixed by the fused biconical taper coupling 19 and the energy thereof is split substantially equally into the output ports 22. Reference may be had to the articles entitled "Bi-taper Star Couplers With Up to 100 Fiber Channels" by Rawson and Bailey, Vol. 15, No. 14 Electronics Letters 432 (1979); "Star Couplers Using Fused Biconically Tapered Multi-Mode Fibers" by Rawson and Nafarrate, Vol. 14, No. 9 Electronics Letters 274 (1978), and to the article entitled "Tapered Section of Multi-Mode Cladded Fibers as Mode Filters and Mode Analyzers" by Ozeki, et al. Vol. 26, No. 7 Applied Physics Letters 386 (1975), incorporated herein by reference, for a description and discussion of experimentally derived

**0171479**

physical parameters which characterize , inter alia, the optical mixing and energy splitting functions of the fused biconical taper coupling therein shown and described. It will, of course, be appreciated that although eight fibers are specifically illustrated herein, the novel transmissive multiport star coupler assembly of the present invention can accomodate from 2 X 2 to N X N ports.

Referring now to Fig. 2A, a monolithic spindle subassembly generally designated 30 of the transmissive multiport star coupler assembly of the present invention includes a first region 32 formed to have a uniform cross-section and a second region 34 formed to have a tappering cross-section. The portion 32 is preferably cylindrical and the portion 34 is preferably a truncated cone. The monolithic spindle 30 is formed from any suitably hard and relatively temperature stable resinous, thermoplastic, or metallic substance such as Lexan, a registered trademark of the General Electric company. By way of example, a spindle subassembly 30 having dimensions of approximately .20 inch in diameter by .38 inch in length can be used to fabricate couplers having from 3 X 2 to 8 X 8 ports with coated optical fibers having an outside diameter of from 100 to 600 microns and larger.

The sections 32 and 34 of the unitary support spindle subassembly 30 are provided with a plurality of longitudinally extending slots therethrough generally designated 36. The number of the slots is selected to be equal to the desired order of the coupler. A spindle having eight slots corresponds to an exemplary 8 X 8 star configuration. Each of the slots 36 has a first region 38 of a comparatively large diameter adapted to accept the outside diameter of a strain-relief jacket material in abutment with a second region 40 of comparatively smaller diameter adapted to accept the outside diameter of an optic fiber with cladding. The section 32 of the spindle subassembly 30 is provided with a central threaded bore 42 to be discussed.

Referring now to Figs. 2B and 2C, which respectively show an isometric end view of the regions 32 and 34, the longitudinally extending slots 36 are symmetrically formed circumferentially about the spindle 30 and extend radially outwardly from a radial point 44 spaced from the longitudinal axis 46 of the spindle to the outer circumference. The dimensions of the radially outwardly extending slots are such as to permit ready insertion therein of optical fibers. The symmetric slot pattern has been found to provide a high packing density of input and output fibers in a comparatively small volume. The geometry of the regions 32 and 34 of the spindle 30 has been found to substantially reduce micro-bending of in-place optic fibers. Excess power losses are thereby kept to within desirable limits.

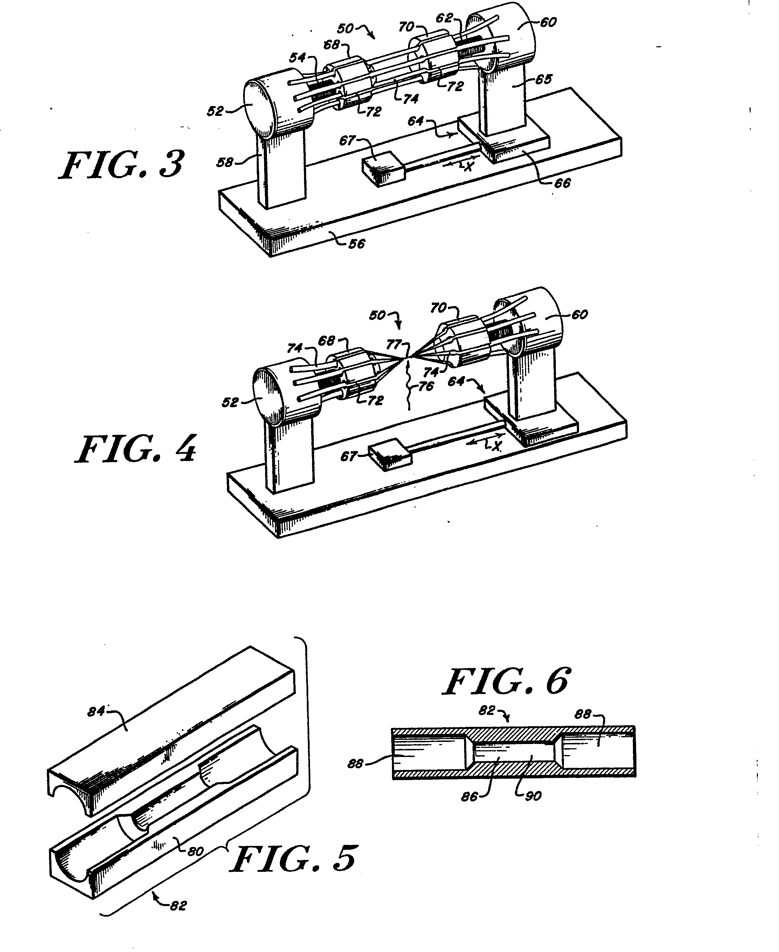

Referring now to Fig. 3, generally designated at 50 is a pictorial view of apparatus used to practice the method of fabricating the transmissive multiport star couplers of the present invention. Apparatus 50 includes a first stepping motor 52 having a rotatable pinvise chuck 54. The motor 52 is fixably mounted to a support 56 having a support strut 58, such as an optical bench. A second coaxially aligned stepping motor 60 having a rotatable pinvise chuck 62 is mounted for translation to the base 56 by a motor-driven X-axis translation stage generally designated 64 over a support strut 65. The X-axis translation stage 64 preferably includes a slide 66 driven horizontally by a motor 67 for controllably effecting translation along the X-axis. The central threaded bore of the input and output support spindles 68 and 70 is used to accept a short threaded stud, not shown, that is held by the notable pinvise chucks to permit easy release and removal of the studs.

In operation, the spindles are rotated until respective ones of the symmetrically formed and circumferentially disposed radially outwardly extending slots 72 are each aligned along a common axis one with the other. A selected length of a preselected optic fiber 74 is then inserted into respective ones of the slots 72 on both the spindles 68 and 70. The buffer coating is chemically and physically stripped to expose the cladding in a region along the length thereof where the star coupling is to be formed. While a slight tension is applied to respective ones of the fibers, a suitable adhesive such as an epoxy is applied to bond each of the optic fibers 74 into corresponding slots 72 in both of the spindles 58 and 70. As can be seen in Fig. 4, the stepping motor 52 or 60 is then actuated to controllably rotate their respective shafts which rotate the spindles to wrap the optic fibers 74 one over the other to form a localized twisted region along their length intermediate to the two spindles. Typically, the stepping motor 60 is used to apply one-half to one turn to the spindle 70 while the spindle 68 is held fixed. Heat preferably from the flame of a micro-gas-torch schematically illustrated at 76 in Fig.4, is then locally applied in the region of the twist to fuse the plurality of optic fibers one onto the other. The motor 67 is then actuated to effect a translation of the X-axis translation stage 64 in a direction along the X-axis such as to pull the spindles 68 and 70 apart to form a fused biconical taper star coupling 77 of the type described in the aforesaid articles.

Referring now to Fig. 5, the star coupling subassembly consisting of the optic fibers respectively bonded in the slots of the support spindles and having the fused biconical taper coupling therebetween is then mounted before removal to one half-shell 80 of a housing generally designated 82 for providing additional stress relief to the star coupling. The housing 82 has a mating and complementary half-shell 84. The star coupling is then removed from the apparatus 50 and the process is repeated. It will be appreciated that the method of the present invention can be practiced manually, semi-automatically, and automatically without departing from the inventive concept.

Referring now to Fig.6, the housing 82 is provided with a Venturi-shaped longitudinally extending passageway 86 therethrough having end regions 88 of enlarged cross-section and a central region 90 intermediate the two end regions of comparatively smaller cross-section. The housing 82 has a geometry complementary the geometry of the spindles and the inside diameter of the enlarged region 88 is selected to be substantially equal to the spindle outside diameter. Housing 80 may be fashioned from any relatively hard and temperature stable thermoplastic, resinous, or metallic substance. Lexan, including stabilizing materials as desired may be used for this purpose.

It is to be understood that many modifications of the present disclosed invention can be effected without departing from the scope of the appended claims.

CLAIMS

1.          Transmissive multiport star coupler assembly (10), characterized in that it comprises :

a plurality of elongated optical fibers (18), twisted, fused, and locally pulled in a region along their length to form a fused biconical taper star coupling (19); and

first and second coaxially aligned spaced-apart support spindles (12,14;30) each having a first section of uniform cross-section (32) and a second abutting section of tapering cross-section (34), each of said spindles (30) are provided with a like plurality of symmetrically disposed circumferential radially extending slots (36) in which corresponding ones of said plurality of optical fibers (18) are bonded at a region along their lengths remote from said fused biconical taper coupling (19).

2.          A transmissive star coupler (10), as recited in claim 1, further including a housing (16), and wherein said first and second spindles (12,14) are respectively bonded one at each end to mating and complementary internal surfaces of said housing (16) to provide stress relief to said fused biconical taper coupler and to prevent environmentally arising damage thereto.

3.          A transmissive multiport star coupler (10) characterized in that it comprises :

first and second spindles (12,14) co-axially spaced-apart along an axis;

a plurality of optical fibers (18) symmetrically bonded circumferentially to said first and second support spindles (12,14) and having a localized region (19) intermediate said first and second support spindles (12,14) wherein light energy present in one or more of said optical fibers to one side of said region is mixed optically and substantially equally split into said optical fibers to the other side of said region; and

and environmentally secure stress-relief housing (16) into which said first and second spindle (12,14) are fixably mounted.

4.          A transmissive multiport star coupler, as recited in claim 3, wherein said region comprises a fused biconical taper coupling (19).

5.          A transmissive multiport star coupler, as recited in any one of claims 3 or 4, wherein each (30) of said spindles (12,14) includes a region of uniform cross-section (32) and a region of tappering cross-section (34) and further include a plurality of longitudinally extending circumferentially symmetric and radially outwardly extending slots (36) therethrough that are adapted to receive respective ones of said optical fibers (18).

6.          A transmissive multiport star coupler, as recited in claim 5, wherein said spindles (12,14) and said housing (16) are fashioned of a relatively hard and temperature stable substance.

7.          A transmissive multiport star coupler, as recited in claim 6, wherein said housing (16,82) has mating and complementary top and bottom portions (84, 80) which are provided with a longitudinally extending passageway (86) therethrough, the inside diameter of said passageway on the ends (88) thereof being selected to be equal to the outside diameter of said spindles (12, 14).

8.          A method for fabricating a transmissive multiport star coupler (10), characterized in that it comprises steps of :

obtaining a plurality of preselected lengths of optic fibers (74);

stripping the buffer coating from said optic fibers (74) at a selected region along their lengths by chemical and physical means to expose the cladding;

inserting respective ones of said fiber optic cables (74) at spaced-apart points therealong into corresponding slots (72) symmetrically disposed on first and second support spindles (68,70);

applying tension to the lengths of cables (74) extending between said spindles;

bonding each of said tensioned fiber optic cables (74) in corresponding slots (72) in respective ones of said spindles (68,70);

rotating said spindles (68,70) to twist said cables (74) each over the other in a local region intermediate said spindles;

heating said cables (74) in said local region of said twist to fuse said cables together;

moving said spindles (68,70) one away from the other to pull said cables (74) longitudinally apart a preselected distance to form a fused biconical taper star coupling (77) in said region; and

mounting said spindles (68,70) in a housing (16,82) to provide stress-relief for, environmental protection of, and additional support to said fused biconical taper coupling (77) to form a transmissive multiport star coupler assembly (10).

**FIG. 1**

**FIG. 2A**

**FIG. 2B**

**FIG. 2C**

0171479

FIG. 3

FIG. 4

FIG. 6

FIG. 5

European Patent
Office

**0171479**
. Application number

**EUROPEAN SEARCH REPORT**

EP 84 40 1625

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CA-A-1 118 621 (L.C. SMYTH)<br>* Claims 1-3,8 * | 1,8 | G 02 B 6/28 |
| D,A | ELECTRONICS LETTERS, vol. 15, no. 14, 5th July 1979; E.G. RAWSON et al. "Bitaper Star Couplers with up to 100 fibre Channels", pages 432,433 | 1,8 | |
| A | DE-A-2 655 382 (SIEMENS AG)<br>* Claim 8 * | 1 | |
| A | US-A-4 377 403 (M.N. McLANDRICH)<br>* Claim 4 * | 2 | |
| A | CH-A- 636 452 (GESELLSCHAFT ZUR FÖRDERUNG DER FORSCHUNG AN DER EIDGENÖSSISCHEN TECHNISCHEN HOCHSCHULE)<br>* Figures 4-8 * | 2 | **TECHNICAL FIELDS SEARCHED (Int. Cl.4)**<br><br>G 02 B 6/28 |
| A | US-A-4 291 940 (B.S. KAWASAKI et al.)<br>* Claims 1-4,6-8 * | | |

The present search report has been drawn up for all claims

| Place of search<br>BERLIN | Date of completion of the search<br>21-03-1985 | Examiner<br>FUCHS R |
|---|---|---|